# EUROPÄISCHE PATENTSCHRIFT

(11) **EP 0 297 493 B1**
(45) Veröffentlichungstag und Bekanntmachung des Hinweises auf die Patenterteilung: **21.07.1993**
(21) Anmeldenummer: 88110251.1
(22) Anmeldetag: 28.06.1988
(51) Int. Cl.: F16L 15/00, F16L 57/00, B65D 59/02, B65D 59/06

(54) **Schutzvorrichtung für Rohrenden**
Protecting device for pipe ends
Dispositif de protection des extremités de tuyaux

(30) Priorität: 30.06.1987 DE 3721541
(43) Veröffentlichungstag der Anmeldung: 04.01.1989
(60) Teilanmeldung: 92115143.7
(73) Patentinhaber: Drilltec Patents & Technologies Company, Inc., Houston, Texas 77043 (US)
(72) Erfinder: Dreyfuss, Wilfried, D-3111 Eimke (DE); Remp, Thomas E., Houston, Texas 77056 (US); Müller, Kurt, D-3110 Uelzen (DE)
(74) Vertreter: König, Norbert, Dipl.-Phys. Dr.

(56) Entgegenhaltungen:
- WO-A-84/04350
- DE-A- 2 939 383
- FR-A- 2 530 225
- GB-A- 2 092 092
- US-A- 2 543 960
- US-A- 3 000 402
- US-A- 4 020 873
- US-A- 4 655 256

## Beschreibung

Die Erfindung betrifft eine Schutzvorrichtung für Rohrenden gemäß Oberbegriff des Anspruchs. 1.

Schutzvorrichtungen, die aus einem Metallgehäuse und einem einteiligen Kunststoffeinsatz bestehen oder aus einem Metallstopfen und einem einteiligen hülsenförmigen Überzug, sind seit langem bekannt, vgl. DE-PS 29 39 384 und DE-OS 28 00 747. Nachteilig ist, daß die Einsätze und Überzüge mit relativ aufwendigen Werkzeugen hergestellt werden müssen, bei denen entweder nach dem Spritzen der Gewindekern herausgeschraubt oder der Einsatz bzw. Überzug vom Kern abgeschraubt werden muß. Werkzeuge mit sogenannten Fallkernen sind wegen des komplizierten Aufbaus nur zur Herstellung von Vorrichtungen hoher Stückzahlen wirtschaftlich einsetzbar.

Ferner sind auch nur aus Kunststoff bestehende Schutzvorrichtungen seit langem bekannt.

Schutzvorrichtungen mit einteiligen Einsätzen oder Überzügen sowie Schutzvorrichtungen, die nur aus Kunststoff bestehen, haben ferner den Nachteil, daß sie bei tiefen Temperaturen infolge des Zusammenziehens des Kunststoffes schwer zu demontieren und noch schwerer zu montieren sind. Das kann beim Gebrauch solcher Schutzvorrichtungen, z.B. an Erdölrohren, die bei sehr unterschiedlichen Temperaturen benutzt werden, zu erheblichen Problemen führen, insbesondere bei der Verwendung an Rohren mit großem Durchmesser.

Bekannt sind auch Schutzvorrichtungen,bei denen das Metallgehäuse oder der Metallstopfen am oberen Rand einfach umgebogen ist, um den Schutzkappen bzw. Schutzstopfen eine höhere Stabilität zu geben. In vielen Fällen, insbesondere bei Rohren mit großem Durchmesser bzw. bei sehr schweren Rohren, reicht die Stabilität aber nicht aus, um das Rohrende und das Gewinde des Rohres gegen Schlagbeanspruchung wirksam zu schützen.

Durch die US-A-3000402 ist eine Gewindeschutzkappe für Rohrenden bekannt, die aus einem Metallgehäuse und einem hülsenförmigen Kunststoffeinsatz besteht. Das Metallgehäuse ist mit einem Bördelrand versehen, der das Einsatzende umgreift. Innenseitig weist der Einsatz eine Ringschulter als Anschlag für das Rohrende auf. Die Stabilität des Gehäuse/Einsatz-Verbundes ist nicht groß, da Mittel zur Drehsicherung zwischen Metallgehäuse und Einsatz sowie zur Verhinderung eines Herausfallens des Einsatzes aus dem Metallgehäuse nicht vorgesehen sind.

Durch die US-A-4655256 sind Gewindeschutzkappen und Gewindeschutzstopfen für Rohrenden bekannt, die ein zylindrisches Metallgehäuse mit einem hülsenförmigen Kunststoffeinsatz bzw. einen zylindrischen Metallstopfen mit einem hülsenförmigen Kunststoffüberzug aufweisen. Der Einsatz und der Überzug weisen jeweils einen Randflansch auf, der stirnseitig von einer Abwinklung des Metallgehäuses bzw. des Metallstopfens überdeckt ist. Zur Sicherung gegen Lösen des Einsatzes vom Überzug bzw. vom Einsatz sind besondere Elemente vorgesehen, was die Herstellung aufwendiger macht.

Die Aufgabe der vorliegenden Erfindung besteht deshalb darin, eine Schutzvorrichtung der eingangs genannten Art so auszubilden, daß eine höhere Stabilität erreichbar ist und die Herstellung erleichtert wird.

Die Aufgabe wird durch die Ausbildung gemäß Kennzeichen des Anspruchs 1 gelöst.

Die Erfindung soll nachfolgend anhand der beigefügten Zeichnung, in der Ausführungsbeipsiele dargestellt sind, näher erläutert werden.

Es zeigt:
- Fig. 1: eine Ausführungsform einer Schutzkappe und
- Fig. 2: eine Ausführungsform eines Schutzstopfens.

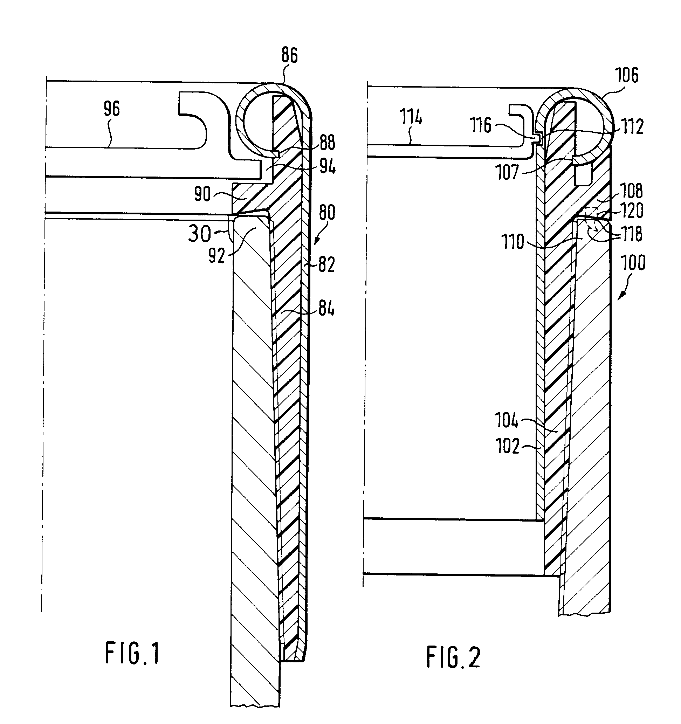

Die Fig. 1 zeigt im Schnitt eine Schutzkappe 80, die ein hohlzylindrisches Metallgehäuse 82 mit einem hülsenförmigen, dicht am Metallgehäuse anliegenden Einsatz 84 aus elastomerem Material aufweist. Der Metallzylinder 82 weist am Außenende einen einwärts umgebogenen Bördelrand 86 auf. Der Einsatz 84 ragt in die Bördelung des Bördelrandes 86 hinein, derart, daß der einwärts umgebogene Teil des Bördelrandes das Ende des Einsatzes überlappt und die freie Bördelkante 88 in den Einsatz eingreift oder am Einsatz klemmend anliegt. Innenseitig weist der Einsatz 84 einen umlaufenden Anschlag 90 für das Rohrende 92 auf, wobei zwischen dem Anschlag 90 und dem Bördelrand 86 des Metallgehäuses 82 ein Zwischenraum 94 nach Art einer Nut belassen ist, in die ein elastischer Deckel 96 wieder herausnehmbar einrastbar ist. Der Anschlag 90 weist eine umlaufende Dichtung 30 auf zur Abdeckung des Dichtspaltes 32 zwischen Anschlag und Rohrende 92.

Die Fig. 2 zeigt im Schnitt einen Schutzstopfen 100, der einen hohlzylindrischen Metallstopfen 102 mit einem hülsenförmigen Überzug 104 aus elastomerem Material aufweist. Der hohlzylindrische Metallstopfen weist am Ende einen auswärts umgebogenen Bördelrand 106 auf. Der Überzug 104 ragt in die Bördelung des Bördelrandes 106 hinein, derart, daß der auswärts umgebogene Teil des Bördelrandes das Ende des Überzuges 104 überlappt und die freie Bördelkante 107 in den Überzug eingreift oder am Überzug klemmend anliegt. Außenseitig weist der Überzug 104 einen umlaufenden Anschlag 108 für das Rohrende 110 auf. Der Metallstopfen weist innenseitig im Bereich des Bördelrandes 106 eine umlaufende Ausnehmung oder mehrere beabstandete Ausnehmungen 112 auf, in die ein elastischer Deckel 114 mit einer umlaufenden Rippe oder mit mehreren beabstandeten Vorsprüngen 116 wieder herausnehmbar einrastbar ist. Auf der ringförmigen Rohr-Anschlagfläche des Anschlages 108 ist zur Abdeckung des Spaltes zwischen Anschlag und Rohrende eine umlaufende Dichtung 118 in Form einer Dichtlippe angeformt, die im nicht beaufschlagten Zustand schräg nach außen zeigt (gestrichelt eingezeichnet). Es kann dort aber auch eine Nut 120 (gestrichelt eingezeichnet) für eine einsetzbare Dichtung ausgebildet sein.

Durch die spezielle Ausbildung des Bördelrandes in Verbindung mit dem Einsatz bzw. dem Überzug nach den Fig. 1 und 2 kann auf zusätzliche Elemente zur Drehsicherung und zur Sicherung gegen Herausfallen (Lösen des Einsatzes bzw. des Überzuges in Axialrichtung) verzichtet werden. Diese Herausfall- und Drehsicherung wird bewirkt durch das Eingreifen der Bördelkanten in das elastomere Material des Einsatzes bzw. des Überzuges oder durch die Klemmwirkung dieser Bördelkante.

## Patentansprüche

1. Schutzvorrichtung für Rohrenden, je nach Verwendung als Kappe oder Stopfen mit einem zylindrischen Metallgehäuse (82) und einem hülsenförmigen Einsatz (84) aus elastomerem Material oder mit einem zylindrischen Metallstopfen (102) und einem hülsenförmigen Überzug (104) aus elastomerem Material, wobei
das Metallgehäuse am äußeren Ende einen nach innen oder der Metallstopfen am äußeren Ende einen nach außen gebogenen Falz aufweist, der den dicht am Metallgehäuse anliegenden Einsatz oder den dicht am Metallstopfen anliegenden Überzug überragt, und
der Einsatz innenseitig oder der Überzug außenseitig jeweils einen umlaufenden Anschlag für das Rohrende aufweist,
**dadurch gekennzeichnet,** daß der Falz des Metallgehäuses (82) oder des Metallstopfens (102) als den Einsatz (84) innenseitig oder den Überzug (104) außenseitig übergreifender Bördelrand (86, 106) ausgebildet ist, dessen freie Bördelkante (88, 107) in der Innenfläche des Einsatzes oder der Außenfläche des Überzuges eingreift oder klemmend an der Innenfläche des Einsatzes oder der Außenfläche des Überzuges anliegt.

2. Schutzvorrichtung nach Anspruch 1, **dadurch gekennzeichnet,** daß zwischen dem Anschlag (90) des Einsatzes (84) und dem Bördelrand (86) des Metallgehäuses (82) ein Zwischenraum (94) belassen ist, in den ein elastischer Deckel (96) wieder herausnehmbar einrastbar ist.

3. Schutzvorrichtung nach Anspruch 1, **dadurch gekennzeichnet,** daß der Metallstopfen (102) im Bereich des Bördelrandes (106) innenseitig eine umlaufende Ausnehmung oder mehrere beabstandete Ausnehmungen (112) aufweist, in die ein elastischer Deckel (114) mit einer umlaufenden Rippe oder mit mehreren beabstandeten Vorsprüngen (116) wieder herausnehmabr einrastbar ist.

4. Schutzvorrichtung nach Anspruch 1, **dadurch gekennzeichnet,** daß der Bördelrand kreisförmig gerollt ist.

5. Schutzvorrichtung nach Anspruch 1, **dadurch gekennzeichnet,** daß der Einsatz (84) im Stirnbereich eine den Dichtspalt zwischen Einsatz (84) und Rohrende (92) abdichtend überragende Lippendichtung (30) aufweist.

6. Schutzvorrichtung nach Anspruch 1, **dadurch gekennzeichnet,** daß der Überzug in dem Anschlag (108) eine umlaufende Nut (120) zur Aufnahme einer Dichtung (118) oder auf dem Anschlag eine angeformte umlaufende Dichtung (118) aufweist.

7. Schutzvorrichtung nach Anspruch 6, **dadurch gekennzeichnet,** daß die umlaufende, angeformte Dichtung (118) eine schräg nach außen zeigende Lippendichtung ist.

## Claims

1. A protecting device for pipe ends, constructed, according to use, as a cap or a plug having a cylindrical metal housing (82) and a tubular insert (84) made from elastomer material or having a cylindrical metal plug (102) and a tubular covering (104) made from elastomer material,
whereby at the outer end the metal housing comprises an inwardly bent fold or at the outer end the metal plug comprises an outwardly bent fold, which protrudes over the insert closely abutting the metal housing or the covering closely abutting the metal plug, and
on the inside the insert or respectively on the outside the covering comprises a circumferential stop for the pipe end,
**characterised in that** the fold in the metal housing (82) or in the metal plug (102) is constructed as a flange (86, 106) overlapping the insert (84) on the inside or the covering (104) on the outside, the free flanged edge (88, 107) of which engages in the inner surface of the insert or the outer surface of the covering or grips the inner surface of the insert or the outer surface of the covering.

2. A protecting device according to Claim 1,
**characterised in that** between the stop (90) on the insert (84) and the flange (86) of the metal housing (82) is provided a space (94), in which an elastic lid (96) can be engaged and again removed.

3. A protecting device according to Claim 1,
**characterised in that** in the region of the flange (106) on the inside the metal plug (102) comprises a circumferential recess or several spaced recesses (112), in which an elastic lid (114) having a circumferential rib or having several spaced protrusions (116) can be engaged and then removed.

4. A protecting device according to Claim 1,
**characterised in that** the flange is rolled in a circular shape.

5. A protecting device according to Claim 1,
**characterised in that** in the front region the insert (84) comprises a lip seal (30) protruding over and sealing the gap between insert (84) and pipe end (92).

6. A protecting device according to Claim 1,
**characterised in that** in the stop (108) the covering comprises a circumferential groove (120) for housing a seal (118) or on said stop said covering comprises a tip-stretched circumferential seal (118).

7. A protecting device according to Claim 6,
**characterised in that** the circumferential, tip-stretched seal (118) is a lip seal pointing diagonally outwards.

## Revendications

1. Dispositif de protection des extrémités de tuyaux, selon l'utilisation en tant que coiffe ou que bouchon, avec un carter métallique cylindrique (82) et un insert (84) en forme de douille en un matériau élastomère ou avec un bouchon métallique cylindrique (102) avec un revêtement en forme de douille (104) en matériau élastomère,
le carter métallique présentant à l'extrémité externe un pli recourbé vers l'intérieur ou le bouchon métallique à l'extrémité externe un pli recourbé vers l'extérieur, qui dépasse l'insert étroitement adjacent au carter métallique ou le revêtement étroitement adjacent au bouchon métallique et
l'insert du côté intérieur ou le revêtement du côté extérieur présentant respectivement une butée continue pour l'extrémité du tuyau,
caractérisé en ce que le pli du carter métallique (82) ou du bouchon métallique (102) est réalisé sous forme de collet rabattu (86, 106) enjambant l'insert (84) intérieurement ou le revêtement (104) extérieurement, dont l'arête repliée libre (88, 107) est en prise dans la surface intérieure de l'insert ou la surface extérieure du revêtement ou est adjacent en serrant à la surface intérieure de l'insert ou à la surface extérieure du revêtement.

2. Dispositif de protection selon la revendication 1,
caractérisé en ce qu'un espace intermédiaire (94), dans lequel un couvercle élastique (96) peut être encliqueté en étant réextractible, est laissé entre la butée (90) de l'insert (84) et le collet rabattu (86) du carter métallique (82).

3. Dispositif de protection selon la revendication 1,
caractérisé en ce que le bouchon métallique (102) présente dans la zone du collet rabattu (106), vers l'intérieur, un évidement continu ou plusieurs évidements (112) espacés, dans lesquels un couvercle élastique (114) peut être encliqueté en étant ré-extractible, au moyen d'une nervure continue ou de plusieurs saillies (116) espacées.

4. Dispositif de protection selon la revendication 1,
caractérisé en ce que le collet rabattu est roulé à forme circulaire.

5. Dispositif de protection selon la revendication 1,
caractérisé en ce que l'insert (84) présente dans la zone frontale une garniture d'étanchéité à lèvres (30) saillante qui scelle la fente d'étanchéité entre l'insert (84) et l'extrémité du tuyau (92).

6. Dispositif de protection selon la revendication 1,
caractérisé en ce que le revêtement présente dans la saillie (108) une rainure continue (120) pour recevoir une garniture d'étanchéité (118) ou sur la saillie une garniture d'étanchéité continue (118) conformée.

7. Dispositif de protection selon la revendication 6,
caractérisé en ce que la garniture d'étanchéité continue (118) conformée est une garniture d'étanchéité à lèvres tournée inclinée vers l'extérieur.
